# EUROPÄISCHE PATENTSCHRIFT

(11) **EP 1 475 255 B1**
(45) Veröffentlichungstag und Bekanntmachung des Hinweises auf die Patenterteilung: **05.03.2008**
(21) Anmeldenummer: 04006636.7
(22) Anmeldetag: 19.03.2004
(51) Int. Cl.: B60G 15/14, F16F 9/04, F16F 9/084

(54) **Radführendes Vorderachs-Federbein**
Front axle suspension strut
Jambe de suspension pour essieu avant

(30) Priorität: 08.05.2003 DE 10320501
(43) Veröffentlichungstag der Anmeldung: 10.11.2004
(73) Patentinhaber: Continental Aktiengesellschaft, 30165 Hannover (DE)
(72) Erfinder: Oldenettel, Holger, 30900 Wedemark (DE)

(56) Entgegenhaltungen:
- DE-A- 3 624 296
- US-A- 4 482 135
- US-A- 4 655 438

## Beschreibung

Ein radführendes Vorderachs-Federbein gemäß dem Oberbegriff des Hauptanspruchs ist in der US 4 655 438 A näher beschrieben.

An der Vorderachse von Pkws werden häufig radführende Federbeine eingesetzt. Da das Rad unmittelbar am Dämpferrohr befestigt ist, entsteht beim Lenken eine Verdrehung des Rohres gegenüber der Karosserie. Diese Verdrehung muss durch ein Drehlager aufgenommen werden.
Das Federbein stützt sich mit einem Kugellager an der Karosserie ab. Dabei werden alle im Federbein erzeugten Kräfte (Auslenkungsamplituden-abhängige Federkräfte und Auslenkungsgeschwindigkeits-abhängige Dämpferkräfte) durch das Lager geleitet. Damit wird das Lager sowohl auf Druck als auch auf Zug belastet und muss hohe Kraftspitzen aufnehmen.
Um die Lagerbelastungen in "erträglichen" Grenzen zu halten, wird häufig nicht das komplette Federbein sondern lediglich die Feder mit einem Drehlager abgestützt. Die Drehbewegung zwischen Dämpferrohr und -Stange wird in diesem Fall von der Dichtung des Dämpfers aufgenommen. D. h.: die Dämpferstange wird direkt an der Karosserie befestigt.
Die Aufnahme der Drehbewegung durch den Dämpfer wird durch eine rotationssymmetrische Ausbildung von Dämpferkolben und Dämpferrohr (Dämpferzylinder) ermöglicht.

Eine derartige Trennung der *Feder*drehbewegung von der *Dämpfer*drehbewegung ist bisher ausschließlich bei *Schrauben-* Federbeinen realisiert worden (siehe z. B. US 4,482,135 nebst dem weiteren dort angegebenen Stand der Technik).

Bei Luftfederbeinen wurden bisher sämtliche Kräfte über ein einziges Federdrehlager geleitet (siehe z. B. Reimpel: "Fahrwerkstechnik: Stoß- und Schwingungsdämpfer", Vogel-Verlag 1989 S. 229; DE-PS 196 07 804 C1 und DE-OS 197 53 637 A1). Ein solches Drehlager muss dann aus den oben genannten Gründen entsprechend stark ausgelegt sein. Eine separate Ausbildung von Federdrehlager und Dämpferdrehlager konnte bisher wegen Dichtungsproblemen im Kopfbereich der Luftfeder nicht realisiert werden.

### Lösung und Vorteile der Erfindung

Dieses Dichtungsproblem im Kopfbereich der Luftfeder eines als Luftfederbein ausgebildeten gattungsgemäßen Federbeins wird nun erstmals mit den Merkmalen des Anspruchs 1 gelöst. Zu diesem Zweck ist zwischen Dämpferlager und Luftfederdeckel eine Dichtung vorgesehen, die entsprechend dem Radeinschlag auf Drehung belastbar ist. Die *Dämpferkräfte* werden wie bei Schraubenfederbeinen - unter Zwischenschaltung eines Gummipuffers - von dem Dämpfer *direkt* auf die Karosserie übertragen.
Dadurch reduzieren sich die auf das Drehlager wirkenden Kraftspitzen. Das Drehlager kann kleiner, leichter und kostengünstiger realisiert werden.
Da auf das Drehlager keine Zugkräfte wirken, ergibt sich eine vereinfachte Montage und eine vereinfachte Befestigung.
Bevorzugte Ausgestaltungen und Abwandlungen ergeben sich aus den Unteransprüchen.

Da das Drehlager keine großen Belastungen auszuhalten hat, kann es als preiswertes Kunststoff-Gleitlager ausgebildet sein.
Kunststoff-Gleitlager sind erheblich kostengünstiger sowie leichter und kompakter.
Durch eine Anordnung der Dichtung oberhalb des Drehlagers befindet es sich innerhalb des Druckraums der Luftfeder, wo es vor Verschmutzung geschützt ist und somit eine hohe Lebensdauer erwartet werden kann.

Bei Integration der Dichtung in das Gleitlager können die günstigen Materialeigenschaften, insbesondere niedriger Reibwert, ausgenutzt werden. Für die Gleitlager werden i. a. hochwertige Kunststoffe mit Graphit-Füllung eingesetzt.

### Zeichnungen

Im folgenden werden drei verschiedene Ausführungsvarianten des erfindungsgemäßen Federbeins dargestellt. Es zeigt:
Fig. 1 einen Längsschnitt durch ein erfindungsgemäßes Federbein;
Fig. 2 einen Längsschnitt durch den Kopfbereich einer Abwandlung des erfindungsgemäßen Federbeins; und
Fig. 3 einen Längsschnitt durch eine weitere Abwandlung.

### Beschreibung

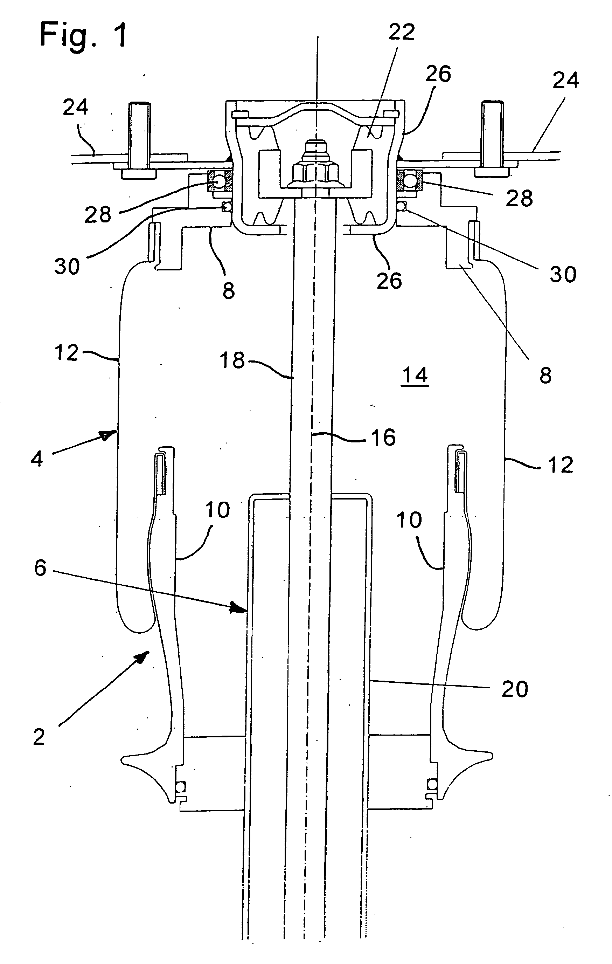

Das in Fig. 1 dargestellte erfindungsgemäße Federbein 2 ist ein sogenanntes Luftfederbein, bestehend aus einer Luftfeder 4 und einem koaxial dazu angeordneten Stoßdämpfer 6.
Die Luftfeder 4 weist zwei abstandsvariable zueinander angeordnete Endglieder 8, 10, nämlich einen Luftfederdeckel 8 und einen Abrollkolben 10, auf, die beide mittels eines Luftfederbalgs 12 druckdicht und zugfest miteinander verbunden sind und so gemeinsam einen Luftfeder-Druckraum 14 umschließen. Auf der Längsachse 16 der Luftfeder 4 befindet sich der Stoßdämpfer 6, der integraler Bestandteil des Luftfederbeins 2 ist. Der Stoßdämpfer 6 weist eine Dämpferstange 18 und ein Dämpferrohr 20 auf.

Dämpferstange 18 und ein nicht dargestellter Dämpferkolben sind ebenso wie die zylindrische Innenwand des Dämpferrohres 20 rotationssymmetrisch ausgebildet, so dass die Dämpferstange 18 gegenüber dem Dämpferrohr 20 nicht nur axiale sondern zudem auch Drehbewegungen ausführen kann.
Das "obere" Ende der Dämpferstange 18 ist undrehbar in einem als Dämpferlager dienenden Gummiblock 22 eingebettet, der sich in einem starr an der Karosserie 24 angebrachten Gehäuse 26 befindet.
Das Dämpferrohr 20 ist starr mit einer zugeordneten Radachse (nicht dargestellt) verbunden.

Von erfindungswesentlicher Bedeutung ist die drehbare und dichte Lagerung des Luftfederdeckels 8 an der Außenwand des Dämpferstangen-Gehäuses 26.

Die Fig. 1 zeigt den Prinzipaufbau einer solchen Lagerung, die im vorliegenden Ausführungsbeispiel aus einem Kugellager 28 und einer ringförmigen Dichtung 30 besteht.

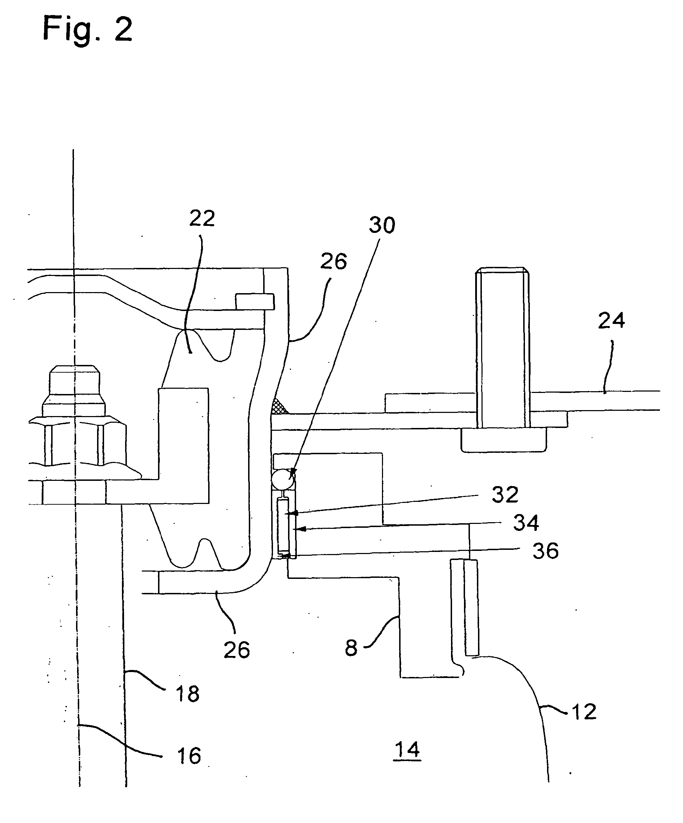

Die in Fig. 2 dargestellte Abwandlung zeigt ebenfalls eine ringförmige Dichtung 30 und statt eines Kugellagers einen Gleitring 32, der zwischen einer äußeren 34 und einer inneren Lagerschale 36 eingebettet ist.

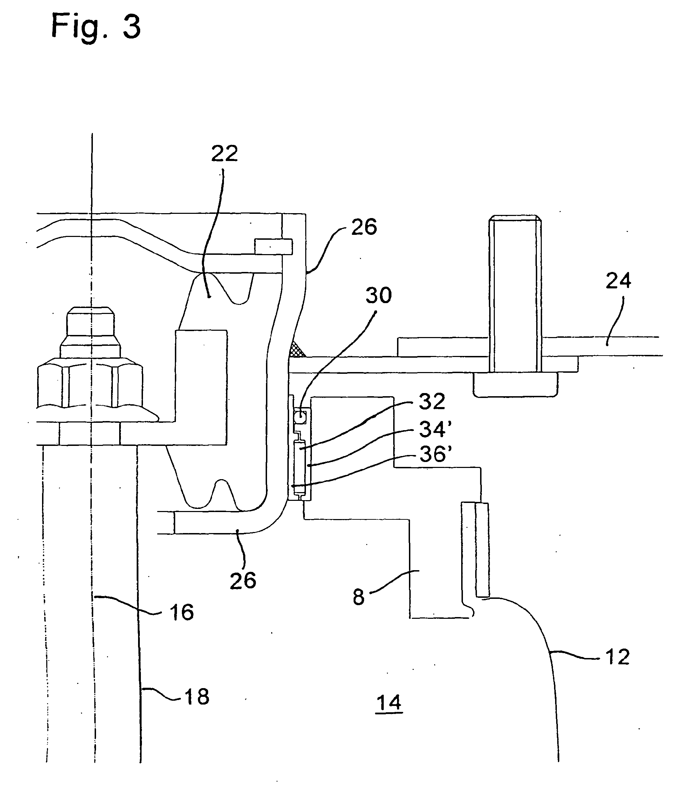

Die in der Fig. 3 vorgestellte weitere Abwandlung zeigt ebenfalls eine ringförmige Dichtung 30 und einen Gleitring 32 als Drehlager.
Während der in der Fig. 2 dargestellte Dichtring 30 unmittelbar zwischen Dämpferstangen-Gehäuse 26 einerseits und Luftfederdeckel 8 andererseits angeordnet ist, ist gemäß Fig. 3 der Dichtring 30 samt dem Gleitring 32 in eine gemeinsame zweiteilige Lagerschale 34', 36' eingebettet.

### Bezugszeichenliste

- 2: Federbein, Luftfederbein
- 4: Luftfeder
- 6: Stoßdämpfer
- 8, 10: Endglieder der Luftfeder
- 8: Luftfederdeckel
- 10: Abrollkolben, Luftfederkolben
- 12: Luftfederbalg
- 14: Luftfederdruckraum
- 16: Längsachse des (Luft-)Federbeins
- 18: Dämpferstange
- 20: Dämpferrohr
- 22: Gummiblock, Dämpferlager, nichtdrehbares Bauteil
- 24: Karosserie
- 26: Gehäuse (des Dämpferstangenkopfes),
Dämpferstangen-Gehäuse
- 28: Kugellager, Drehlager
- 30: (ringförmige) Dichtung, Dichtring
- 32: Gleitring
- 34, 34': äußere Lagerschale
- 36, 36': innere Lagerschale

## Patentansprüche

1. Radführendes Vorderachs-Federbein (2),
bestehend aus einer Feder mit axial darin integriertem Stoßdämpfer (6),
wobei die Feder aus zwei abstandsvariabel zueinander angeordneten Endgliedern (8, 10) mit dazwischen befindlichem Federelement aufgebaut ist, und
wobei der Dämpfer (6) aus einem Dämpferrohr (20) und einer axial darin verschiebbaren und drehbaren Dämpferstange (18) besteht, die über ein nichtdrehbares Dämpferlager (22) an der Karosserie (24) angelenkt ist, und
wobei das "obere" Feder-Endglied (8) mittels eines Drehlagers (28) um seine Längsachse (16) drehbar an der Karosserie (24) angelenkt ist und das "untere" Feder-Endglied (10) fest mit dem Dämpferrohr (20) und so gemeinsam mit einer Vorderachse verbunden ist, wobei
das "obere" Federendglied ein Luftfederdeckel (8) und dass "untere" Federendglied ein Luftfederkolben (10) ist, zwischen denen ein Luftfederbalg (12) druckdicht und zugfest angeordnet ist, **dadurch gekennzeichnet, dass**
zwischen Luftfederdeckel (8) und dem nichtdrehbaren Bauteil (Dämpferlager, 22) ein Drehlager (28) und eine Dichtung (30) angeordnet ist, die entsprechend einem Radeinschlag auf Drehung belastbar sind.

2. Federbein nach Anspruch 1,
**dadurch gekennzeichnet,**
**dass** die Dichtung (30) als Rundschnurring oder als Wellendichtung ausgeführt ist.

3. Federbein nach Anspruch 1,
**dadurch gekennzeichnet,**
**dass** das Drehlager (28) als Kunststoff-Gleitlager realisiert ist.

4. Federbein nach einem der Ansprüche 1 bis 3,
**gekennzeichnet durch**
Anordnung der Dichtung (30) oberhalb des Drehlagers (28), wobei sich das Lager (28) im Druckraum der Luftfeder (4) befindet.

5. Federbein nach einem der Ansprüche 1 bis 4,
**gekennzeichnet durch**
Integration der Dichtung (30) in ein Kunststoff-Gleitlager.

## Claims

1. Wheel-guiding front axle spring strut (2),
composed of a spring with a shock absorber (6) integrated axially therein,
with the spring being constructed from two end members (8, 10), which are arranged with a variable spacing to one another, with a spring element situated in between, and
with the shock absorber (6) being composed of a shock absorber tube (20) and a shock absorber rod (18) which is axially movable and rotatable therein and which is articulatedly connected to the body (24) by means of a non-rotatable shock absorber mount (22), and
with the "upper" spring end member (8) being articulatedly connected to the body (24), so as to be rotatable about its longitudinal axis (16), by means of a rotary bearing (28), and the "lower" spring end member (10) being fixedly connected to the shock absorber tube (20) and thus being connected together with a front axle,
with the "upper" spring end member being an air spring cover (8) and the "lower" spring end member being an air spring piston (10), between which an air spring bellows (12) is arranged in a pressure-tight and tension-resistant manner,
**characterized**
**in that** a rotary bearing (28) and a seal (30) is arranged between the air spring cover (8) and the non-rotatable component (shock absorber mount, 22), which rotary bearing (28) and seal (30) can be subjected to rotational loading corresponding to a wheel steer angle.

2. Spring strut according to Claim 1,
**characterized**
**in that** the seal (30) is embodied as an O-ring or as a shaft seal.

3. Spring strut according to Claim 1,
**characterized**
**in that** the rotary bearing (28) is realized as a plastic plain bearing.

4. Spring strut according to one of Claims 1 to 3,
**characterized by**
the arrangement of the seal (30) above the rotary bearing (28), with the bearing (28) being situated in the pressure space of the air spring (4).

5. Spring strut according to one of Claims 1 to 4,
**characterized by**
the integration of the seal (30) into a plastic plain bearing.

## Revendications

1. Jambe de suspension (2) pour essieu avant, guidant les roues,
constituée d'un ressort avec un amortisseur (6) intégré axialement à l'intérieur,
le ressort se composant de deux organes d'extrémité (8, 10) disposés à distance variable l'un par rapport à l'autre avec un élément de ressort situé entre eux, et
l'amortisseur (6) se composant d'un tube amortisseur (20) et d'une tige d'amortissement (18) pouvant tourner et coulisser axialement à l'intérieur, qui est articulée à la carrosserie (24) par le biais d'un palier d'amortisseur (22) non rotatif, et
l'organe d'extrémité de ressort (8) "supérieur" étant articulé au moyen d'un palier pivotant (28) à la carrosserie (24) de manière à pouvoir pivoter autour de son axe longitudinal (16), et l'organe d'extrémité de ressort (10) "inférieur" étant connecté fixement au tube amortisseur (20) et de ce fait conjointement à un essieu avant,
l'organe d'extrémité de ressort "supérieur" étant un couvercle de ressort pneumatique (8) et l'organe d'extrémité de ressort "inférieur" étant un piston de ressort pneumatique (10), entre lesquels est disposé un soufflet de ressort pneumatique (12), de manière étanche à la pression et résistant à la traction,
**caractérisée en ce que**
l'on dispose entre le couvercle de ressort pneumatique (8) et le composant non rotatif (palier d'amortisseur, 22), un palier pivotant (28) et un joint d'étanchéité (30), qui peuvent être sollicités en rotation conformément à un braquage des roues.

2. Jambe de suspension selon la revendication 1,
**caractérisée en ce que**
le joint d'étanchéité (30) est réalisé sous la forme d'une bague à cordon rond ou sous forme de joint d'étanchéité à lèvre.

3. Jambe de suspension selon la revendication 1,
**caractérisée en ce que**
le palier pivotant (28) est réalisé sous forme de palier lisse en plastique.

4. Jambe de suspension selon l'une quelconque des revendications 1 à 3,
**caractérisée par**
un agencement du joint d'étanchéité (30) au-dessus du palier pivotant (28), le palier (28) se trouvant dans l'espace de pression du ressort pneumatique (4).

5. Jambe de suspension selon l'une quelconque des revendications 1 à 4,
**caractérisée par**
l'intégration du joint d'étanchéité (30) dans un palier lisse en plastique.
